(19) Europäisches Patentamt
European Patent Office
Office européen des brevets

(11) **EP 2 058 638 A2**

(12) **EUROPÄISCHE PATENTANMELDUNG**

(43) Veröffentlichungstag:
**13.05.2009 Patentblatt 2009/20**

(51) Int Cl.:
**G01L 5/10** *(2006.01)*

(21) Anmeldenummer: **08450174.1**

(22) Anmeldetag: **06.11.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **08.11.2007 AT 18042007**

(71) Anmelder: **Müller, Johann, DI**
**2700 Wr. Neustadt (AT)**

(72) Erfinder: **Müller, Johann, DI**
**2700 Wr. Neustadt (AT)**

(74) Vertreter: **Patentanwälte**
**BARGER, PISO & PARTNER**
**Mahlerstraße 9**
**1010 Wien (AT)**

(54) **Messwertaufnehmer für umlaufende Zugmittel**

(57) Die Erfindung bezieht sich auf einen Messwertaufnehmer für umlaufende Zugmittel zur Bestimmung des übertragenen Drehmoments, mit einem in Bezug auf das Zugmittel ruhenden Trägerteil und einem Übertragungselement, auf dem zwei Umlenkrollen vorgesehen sind, die in unterschiedliche Richtung verlaufende Zugmittelabschnitte berühren, und einem Sensor, der mit dem Übertragungselement zusammenwirkt.

Um die Messergebnisse zu verbessern und reproduzierbar zu machen ist das Übertragungselement (4, 16, 18, 21, 26, 35) um eine stationäre Drehachse (10, 30) verdrehbar am Trägerteil (13) gelagert.

**Fig. 1**

EP 2 058 638 A2

**Beschreibung**

Die Erfindung bezieht sich auf einen Messwertaufnehmer für umlaufende Zugmittel zur Bestimmung des übertragenen Drehmoments, mit einem in Bezug auf das Zugmittel ruhenden Trägerteil und einem Übertragungselement, auf dem zwei Umlenkrollen vorgesehen sind, die in unterschiedliche Richtung verlaufende Zugmittelabschnitte berühren, und einem Sensor, der mit dem Übertragungselement zusammenwirkt. Die Erfindung bezieht sich insbesondere auch auf ein Messsystem für (Rad-)ergometer. Solche Messsysteme sind seit Jahren bekannt. An physikalisch-mechanischen Größen erfassen sie im Allgemeinen die Trittfrequenz und die Trainingsleistung. Weitere Angaben bzw. Einstellwerte wie "Fahrtgeschwindigkeit", "Fahrbahnsteigung", Kalorienverbrauch u. ä. dürften seitens des Herstellers nur als Richtwerte präsentiert und vom Anwender nur als solche verstanden werden.

Radergometer bestehen - vom Ergometerrahmen abgesehen - aus vier Funktionseinheiten: Kurbelsystem, Schwungscheibe, Bremssystem sowie der Einstell-, Mess- und Anzeigeeinheit (elektrisch-elektronische Peripherie).

Das Messsystem ist dabei zumeist in das Bremssystem eingebunden. Letzteres hat die Aufgabe, die mittels Kurbeltritt in das Ergometer eingetragene mechanische Arbeit zu "vernichten", nämlich in Abwärme umzusetzen. Die Schwungscheibe soll die im Kurbelzyklus hohe Unrundheit des Kurbelmoments teilweise ausgleichen.

Die Trittfrequenz wird im Allgemeinen mittels herkömmlicher magnetischer oder optischer Sensorik erfasst, welche pro Kurbelumdrehung meist nur einen Impuls liefert.

Sieht man von Beschleunigungs- und Verzögerungsphasen ab, wird dem Kurbelmoment durch ein gleich großes Bremsmoment das "Gleichgewicht gehalten", wird die eingetragene Kurbelleistung durch eine gleich große Bremsleistung wieder entzogen. Daher wird bei herkömmlichen Ergometern, auch bei solchen höherer Qualitäts- und Preiskategorien, mechanische Leistung nicht als eine dem System zugeführte, sondern durch Bremsung entzogene Größe behandelt.

Weiters tritt Leistung weder als unmittelbare Messgröße oder aus anderen Messgrößen gebildete Größe auf. Die Trainingsleistung wird vielmehr als zu erfüllender Trainingsparameter am Ergometer voreingestellt. Bei gehobenen Ergometern kann auch ein zeitlicher Leistungsverlauf vorgegeben werden.

Da das Ergometer der trainierenden Person keine bestimmte Trittfrequenz aufzwingen kann, muss die elektrisch-elektronische Peripherie des Ergometers jedoch in der Lage sein, dem Probanden jene mechanische Größe aufzuzwingen, welche in Verbindung mit der aktuellen Trittfrequenz die voreingestellte Leistung gewährleistet. Nun ist Leistung das Produkt aus Winkelgeschwindigkeit (einer Umrechnungsgröße der Trittfrequenz) und Drehmoment. Das Ergometer muss somit in einer Art von Regelungsvorgang zur - möglichst in jedem Kurbelzyklus gemessenen - Trittfrequenz ein solches Bremsmoment "beistellen", dass der eingestellte Leistungswert resultiert.

Bei mechanischen Bremsen wird das notwendige Bremsmoment durch entsprechende Reibflächen-Presskräfte, Bremsbandkräfte u. ä. hergestellt. Der Zusammenhang dieser Kraftwirkungen mit dem erzielten Bremsmoment, allenfalls mit der Bremsleistung selbst muss in Kalibriermessungen gesichert und elektronisch gespeichert werden. Der praktische Einsatz ist jedoch an die Annahme gebunden, dass die Reibungsverhältnisse unabhängig von Relativgeschwindigkeit, Temperatur und Verschleiß der Reibflächen unverändert bleiben.

Beim inzwischen vorherrschenden Wirbelstrom-Bremsprinzip erfolgt das Anpassen des Bremsmoments an die jeweilige Trittfrequenz durch Nachregeln der Flussdichte des Magnetfeldes.

- Bei elektromagnetisch erzeugtem Magnetfeld geschieht dies mittels Veränderung des Spulenstroms.
- Bei mittels Dauermagneten erzeugtem Magnetfeld wird der Abstand der Dauermagnetelemente gegenüber dem - im Allgemeinen die Bremsscheibe umgebenden - elektrisch leitenden Band- oder Ringelements verstellt.
- In beiden Fällen muss im Nachregelungsvorgang jedoch berücksichtigt werden, dass das Wirbelstrom-Bremsmoment nicht nur von der magnetischen Flussdichte abhängt (quadratisch proportional), sondern auch von der aktuellen Winkelgeschwindigkeit (direkt proportional). All diese für herkömmliche Ergometer typischen Techniken implizieren einige Nachteile bzw. verunmöglichen die Erfassung weiterführender Messziele.
- In Beschleunigungsphasen (Erhöhung der Trittfrequenz) wird nur ein Teil von Kurbelmoment bzw. Kurbelleistung durch Bremsmoment bzw. Bremsleistung kompensiert und dadurch auch messtechnisch erfasst. Der restliche, wenn auch meist nicht dominierende Teil dient als Beschleunigungsmoment bzw. Beschleunigungsleistung zur Erhöhung der kinetischen Energie rotierender Bauteile, insbesondere der Schwungscheibe. In Beschleunigungsphasen (Sprintsimulation) wird daher zuwenig Leistung angezeigt, in Verzögerungsphasen dafür zuviel: Ein Teil der angezeigten Leistung resultiert aus der Abnahme der kinetischen Energie, nicht jedoch aus der eingetragenen Trittleistung.
- Die Trainingsleistung und damit das Leistungstraining stehen im Vordergrund, schon das Kurbelmoment scheint nicht als ausgewiesene Größe auf.

Für Trainingsanalyse, Trittschulung, Physiotherapie und Rehabilitation stellen sich jedoch auch weitergehende Fragen:

(a) Welche Werte nimmt das Kurbelmoment selbst an?

(b) Welchen Verlauf hat das Kurbelmoment in Abhängigkeit vom Kurbelwinkel?

(c) Daraus Rückschlüsse auf Pedalkräfte

(d) Welchen Verlauf hat die Winkelgeschwindigkeit entlang des Kurbelwinkels?

(e) Ermittlung der Kurbelleistung - also der Gesamt- und nicht Bremsleistung!

(f) Verlauf der Kurbelleistung entlang des Kurbelwinkels, *daraus* etwa auch Leistungsmittelwert (bei herkömmlichen Ergometern wird Mittelwert vorgegeben)

(g) Unterscheidbarkeit der Beiträge von linkem und rechtem Bein

Dies erfordert die messtechnische Erfassung folgender Größen:

(1) Verlauf der Winkelgeschwindigkeit entlang der Zeitachse - mit entsprechend vielen Messwerten pro Kurbeldrehung

(2) Synchron ermittelter Verlauf des Kurbelmoments entlang der Zeitachse

(3) Ein Signal pro Umdrehung für charakteristischen Kurbelwinkel (Rücksetzsignal)

(4) Drehrichtungserkennung für Kurbeldrehung
Alle sonstigen trainingsanalytischen Parameter werden durch rechnerische Verknüpfung der Messsignale (1) bis (4) gewonnen.

Die Messgrößen (1), (3) und (4) werden nach Standardverfahren oder in Anlehnung an solche ermittelt. Das Messziel (2) kann im Stand der Technik jedoch nur unzureichend gewonnen werden, da alle bekannten Verfahren mit erheblichen Nachteilen behaftet sind.

Es sind mehrere Verfahren zur Gewinnung des Kurbelmoments in kurbelgetriebenen Sportgeräten, insbesondere Rennrädern (Straße) und Mountainbikes bekannt:

• Messort Kettenblatt, System SRM (Fa. Schoberer, Jülich, Deutschland):

Als Messort dient hier der speziell ausgestaltete Zentralbereich des Kettenblattpakets. Auf diesen Bereich wirkt von innen, ausgehend von der Kurbelachse ein Torsionsmoment, von außen her, ausgehend vom Zahnkranz ein entgegengesetzt gleich großes Moment. Die dadurch bewirkte Verformung dieses Bereichs bzw. spezieller Elemente desselben wird als Maß für das von innen nach außen übertragene Kurbelmoment verwendet (mittels Dehnmessstreifen-Technik).

Dieses Messverfahren ist einerseits genau, verlässlich und bewährt, andererseits aber relativ teuer, da die maßgebliche Messsignalgewinnung an einem rotierenden Bauteil erfolgt: Die Übertragung sowohl von Messsignalen zum Fahrradrahmen als auch von Energie in Gegenrichtung (für Sensorik und Elektronik) wird mittels berührungsloser, nämlich induktiver Methode durchgeführt.

• Messort Kurbellager (Tretlager), z.B. System Ergomo, SG Sensortechnik GmbH:

Die Methode, das von einer Welle oder Achse durchgeleitete Drehmoment anhand der Verdrehung eben dieser Welle oder Achse zu erfassen, ist seit längerem bekannt und wird für Rennräder sowie Mountainbikes von der Firma SG Sensortechnik im Produkt Ergomo auch angewandt. Vom relativ hohen Preis des Messsystems abgesehen haftet ihm ein grundsätzlicher Mangel, wenn nicht

Fehler an: Das in der Kurbelachse transportierte Kurbelmoment entstammt nur einer Kurbel bzw. einem, im Allgemeinen linken Bein. Der Momentenbeitrag des rechten Beins verläuft von dessen Kurbel direkt in den Kettenblattblock. Bei Ergomo wird - entgegen den Herstellerangaben - nur das Kurbelmoment des linken Beins gemessen und einfach mit zwei multipliziert. Damit ergibt sich ein zwangsläufiger Messfehler in der Höhe der halben Links-rechts-Differenz. Da letztere im Durchschnitt mindestens 10% beträgt, liegt der systembedingte Messfehler im Mittel über 5%.

Von diesem Messfehler abgesehen, scheidet der Messort Kurbellager bei allen Messvorhaben aus, bei denen die getrennte Bewertung von linkem und rechtem Kurbeltritt erklärtes Ziel ist - wie im Falle des erfindungsgemäßen Messsystems.

• Messort Kette, Prinzipielles
Das Kurbelmoment wird bei Fahrrädern und Mountainbikes mittels Kette zum Zahnkranz am Hinterrad übertragen, bei vielen Ergometern zum - mit der Schwungscheibe verbundenen - Ritzel. Der Betrag des Kurbelmoments ergibt sich dabei zu: Kraftdifferenz zwischen (oberer) gespannter und unterer (teilentspannter) Kette multipliziert mit dem "Teilkreisradius" des Kettenblattes (dieser Zusammenhang wird am besten durch eine Kalibriermessung quantifiziert). Die messtechnische Erfassung beider Kettenkräfte liefert somit das übertragene Kurbelmoment.

• Messort Kette, System Polar
Zur Messung der in der vorlaufenden, durch das Kurbelmoment gespannten Kette wirksamen Zugkraft wird der Umstand ausgenützt, dass die Eigenfrequenz der Ketten- Transversalschwingung von ihrer Zugkraft abhängt. Ausreichende nichtperiodische Erregung findet bei den meisten Trainings- bzw. Fahrbahnverhältnissen statt. Die Schwingung der im Allgemeinen ferromagnetischen Kette wird induktiv erfasst und die Schwingfrequenz bestimmt. Das Messsystem weist trotz der eher komplexen Zusammenhänge geringe Baugröße und niedrigen Preis auf.

Nachteile allgemeiner Art:

(1) Die Eigenfrequenz hängt auch von der freien, schwingungsfähigen Länge der Kette ab, diese ändert sich jedoch je nach Schaltposition der Gangschaltung.

(2) Glatte Fahrbahnen bedeuten (zu) geringe Schwingungsanregung.

(3) Die Kettenkraft in der rücklaufenden Kette wird vernachlässigt, dies macht sich bei niedrigen Kurbelmomenten stärker bemerkbar. Aus (1) bis (3) resultieren deutliche Genauigkeitseinbußen. Nachteile für Verwendung bei Ergometern:

(4) Die Kettenschwingung müsste "künstlich", etwa durch Magnetimpulse angeregt werden.

(5) Bei den meisten Ergometern läuft keine Kette, sondern ein Profilriemen um (Gummi, Kunststoff).

(6) Bei Ergometern führt auch der rücklaufende Ketten- bzw. Riemenabschnitt eine erhebliche Spannkraft, somit wären zwei getrennte Messsysteme notwendig.

Bei einer weiteren Methode wird das Kurbelmoment ebenfalls anhand der in Kette oder Profilriemen wirksamen Zugkräfte ermittelt.

- Als Messprinzip dient der Um- bzw. Auslenkvorgang der Kette bzw. des Bandes aus ihrer/seiner sonst geradlinigen Richtung um einen definierten Umlenkwinkel (Differenzwinkel gegenüber den ursprünglichen 180°).
- Als unmittelbare Messgröße dient die dafür notwendige Um- bzw. Auslenkkraft, welche unmittelbar an jenem Ritzel bzw. jener Rolle abgegriffen wird, welche zur Auslenkung der Kette bzw. des Riemens dienen.
- Für den Zusammenhang zwischen Riemen- bzw. Kettenkraft und Umlenkkraft gilt:

$$U = 2 * F * \sin(\alpha / 2)$$

Dabei sind F die Riemen- oder Kettenkraft, U die Umlenkkraft und $\alpha$ der Umlenkwinkel.

Dieses Messverfahren ist seit langem bekannt. Es wird u. a. dafür verwendet, um Papier-, Textil- oder sonstige Bahnen während Fertigungs- oder Aufrollvorgängen unter definierter Zugspannung zu halten. In diesen Fällen dienen Walzen oder andere kreiszylindrische Körper zur Umlenkung der Bahnen, Bänder u. ä.

Da bei Ergometern nicht nur im oberen, sondern auch im unteren Ketten- bzw. Riemenabschnitt erhebliche Zugkräfte wirksam sind, würden nach dem oben Ausgeführten zwei unabhängige Umlenkvorrichtungen mit eigenen Messsystemen für die Umlenkkraft notwendig sein. Aus der Differenz der beiden, jeweils aus den Umlenkkräften rückgerechneten Riemen- bzw. Kettenkräfte lässt sich das eingetragene Kurbelmoment ermitteln.

Im folgenden werden Beispiele aus dem Stand der Technik näher behandelt.

Die US 4,909,086 A ist nächstliegender Stand der Technik und offenbart einen Messwertaufnehmer zu Bestimmung des Drehmomentes eines Riementriebes. Er besteht aus zwei Umlenkrollen, die über ein längliches Verbindungselement miteinander verbunden sind und die in entgegengesetzte Richtung laufenden Riemenabschnitte berühren, nach innen umlenken und gleichsam zwischen sich einschließen. Das Verbindungselement mit den Umlenkrollen ist über einen Biegebalken mit einer stationären Plattform verbunden, wobei sich der Biegebalken entlang der gesamten Distanz zwischen Plattform und Verbindungselement erstreckt. Der Biegebalken ist mit zwei Dehnmessstreifen versehen, die die Verformung des Biegebalkens aufnehmen, wenn das Verbindungselement mit den Rollen durch den Riemen ausgelenkt werden. Der große Nachteil dieser Konstruktion besteht darin, dass der Messeffekt nur sehr gering und daher von beschränkter Genauigkeit ist. Ein höhere Messgenauigkeit ist nur bei geringer Veränderung der Messgeometrie und damit geringer Absenkung des Verbindungselements möglich. Bei einem sich über die gesamte Länge verformenden Biegebalken ist dies nur bei überall geringer lokaler Krümmung möglich. Entsprechend niedrig sind die sensorisch erfassbaren Oberflächendehnungen.

Die GB 2 312 193 A offenbart eine Vorrichtung mit einer zwischen den Riemen gelagerten Rolle, deren Verschiebung durch eine sich verändernde Zugkraft einen Schalter betätigt, der einen Motor in Betrieb setzt, um den Radfahrer beim Training zu unterstützen.

Einen ähnlichen Gegenstand, jedoch mit Messwertaufnehmer offenbart die WO 2004/111591 A1. Die zwischen den Riemen gelagerte Rolle ist über einen langen Biegebalken mit einer festen Plattform verbunden. Auch hier ergibt sich das Problem, dass der Messeffekt nur sehr gering ist, wodurch erhebliche Ungenauigkeiten auftreten.

Die US 3,992,932 A und die US 3,598,999 A beschreiben jeweils einen Riemenantrieb, der zwischen zwei Rollen geführt und durch diese abgelenkt wird. Die relative Zugspannung der einzelnen Riemenabschnitte kann mittels eines Messwertaufnehmers bestimmt werden. Allerdings benötigt diese Konstruktion eine adäquate Führung der Rollen, da ansonsten der gesamte Messwertaufnehmer herumschlenkern kann.

Die GB 2 193 936 A offenbart im Zusammenhang mit einem Fahrradriemenantrieb einen Kraftsensor, der über einen drehbar gelagerten Hebel mit dem Kettenantrieb zusammenwirkt, um in Abhängigkeit davon einen Motor zuzuschalten. Die Bestimmung des Drehmomentes ist mit dieser Anordnung nicht möglich.

Bei der CA 2 310 974 A1 erfolgt die Übertragung zwischen der Innenseite des Kettenantriebs und einem Messwertaufnehmer über einen vorgespannten drehbaren Hebel. Der Messwert wird an eine Kontrolleinheit weitergegeben, um einen Hilfsmotor zu aktivieren.

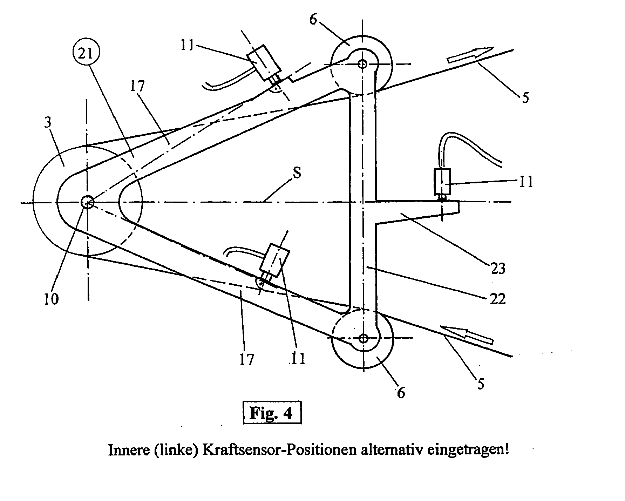

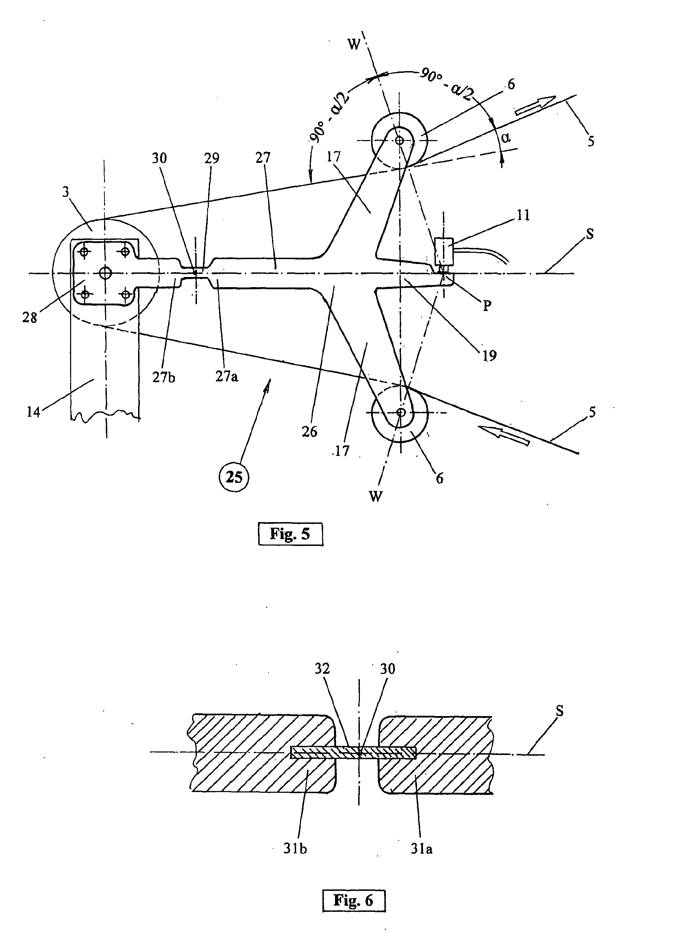

Die DE 34 29 864 A1 betrifft eine Vorrichtung zur wegfreien Messung der Fadenzugkraft am laufenden Faden. Es handelt sich somit um keinen umlaufenden Faden und auch kein Zugmittel. Es kann lediglich die Zugkraft, aber kein Drehmoment gemessen werden. Als Kraftsensor dient eine mit Dehnungsmessstreifen besetzte Membran, auf die ein drehbar gelagerter Hebel wirkt, der eine am Faden anliegende Rolle aufweist (Fig. 4, 6).

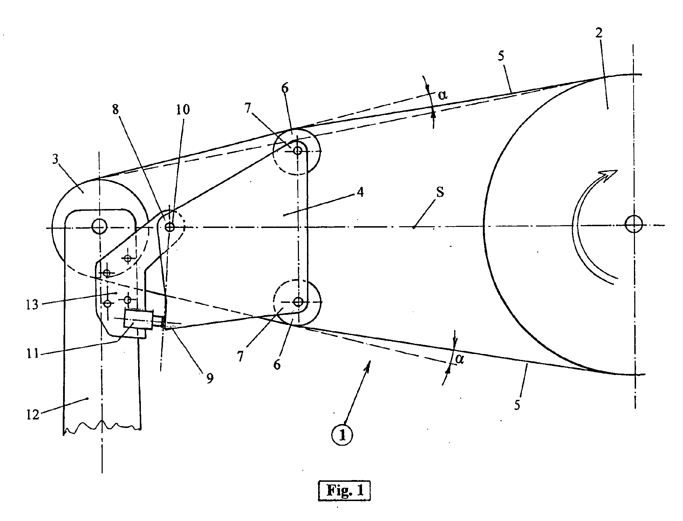

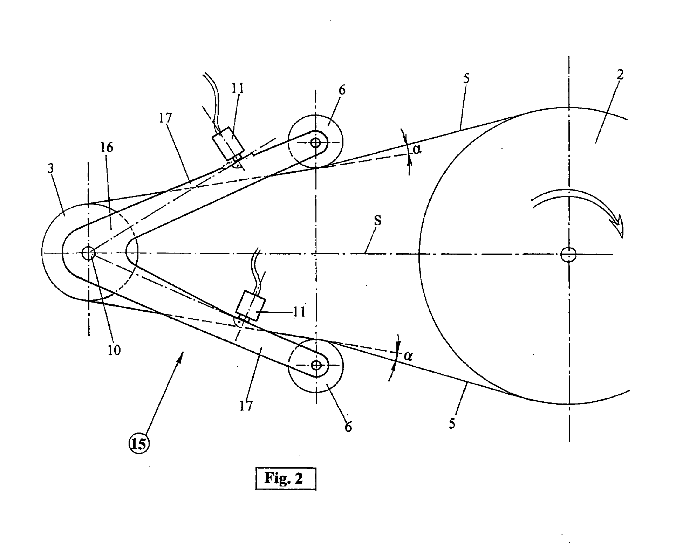

Die DE 90 14 326 U1 offenbart ein Riemengetriebe u.a. für sportmedizinische Geräte, die einen drehbar gelagerten Rollenträger aufweist, an dessen beiden Armen jeweils eine Rolle von außen am Riemen anliegt (Fig. 1, 2). Es wird bei dieser Vorrichtung kein Messwert aufgenommen, sondern lediglich die Vorspannung des Riemens einer Selbstregulierung unterzogen, die auf ein veränderbares Drehmoment reagiert.

Das Ziel der Erfindung besteht darin, die Probleme des Standes der Technik zu lösen und einen Messwertaufnehmer bereitzustellen, der genaue und reproduzierbare Messwerte für das übertragene Drehmoment liefert und in seiner Konstruktion und seinem Einbau einfach und robust ist. Insbesondere ist ein Ziel der Erfindung, einen Messwertaufnehmer für durch Riementrieb übertragene Kurbelmomente von Radergometern und anderen kurbelgetriebenen Sport- bzw. Trainingsgeräten bereitzustellen, bei dem sich die Erfassung des Kurbelmoments - von einer Kalibrierkonstanten abgesehen - auf die Messung des durch zwei Riemenumlenkkräfte hervorgerufenen, auf ein Starrkörperelement ausgeübten Drehmomentes (Kraftmoments) beschränkt. Es soll auch möglich sein, sich auf die Messung einer der beiden Riemenumlenkkräfte zu beschränken.

Dieses Ziel wird mit einem Messwertaufnehmer der eingangs genannten Art dadurch erreicht, dass das Übertragungselement um eine stationäre Drehachse verdrehbar am Trägerteil gelagert ist.

Durch die Ausbildung einer stationären Drehachse zwischen Übertragungselement und Trägerteil wird die Verdrehung des Übertragungselementes oder die zur Verhinderung einer solchen Verdrehung notwendige Krafteinwirkung klar definiert. Die Einschränkung der Freiheitsgrade auf eine einzige Drehachse ermöglicht nicht nur äußerst genaue und reproduzierbare Messergebnisse. Der Trägerteil selbst ist ortsfest, ruht somit in Bezug auf die umlaufenden Zugmittel, er stellt somit den Bezugspunkt der erfindungsgemäßen Anordnung dar. Der Ausdruck stationäre Drehachse bedeutet, dass die Drehachse während des gesamten Schwenkvorganges des Übertragungselementes am selben Ort bleibt, also in Bezug auf den ruhenden Trägerteil ihre Position nicht verändert.

Bei Ausführungsformen der Erfindung, bei denen der Sensor nicht im Übertragungselement integriert ist, sind darüber hinaus auch Messungen an jeder beliebigen Stelle des Übertragungselementes bzw. von jedem beliebigen Fixpunkt aus möglich.

In einer Ausführungsform ist die stationäre Drehachse im wesentlichen auf der Höhe der Symmetrieachse zweier in unterschiedliche Richtung verlaufender Zugmittelabschnitte angeordnet ist und sitzen die stationäre Drehachse und die Drehachsen der Umlenkrollen im wesentlichen an den Ecken eines gleichschenkeligen Dreiecks, wobei die Höhenlinie des Dreiecks im wesentlichen mit der Symmetrieachse zusammenfällt.

Beim erfindungsgemäßen Messwertaufnehmer für das Kurbelmoment wird die Tatsache genützt, dass sich das Kurbelmoment in der Zugkraft-Differenz zwischen dem auf die Kurbelscheibe zulaufenden und dem von dieser weglaufende Riemenabschnitten widerspiegelt. Die Differenzbildung zwischen den beiden in unterschiedliche Richtung verlaufenden Zugmitteln erfolgt rein mechanisch. Lässt man nämlich beide Umlenkkräfte auf ein und denselben starren Bauteil einwirken, dann ist das resultierende Moment beider Kräfte, bezogen auf jeden beliebigen, auf der Symmetrieachse des Riemen- oder Kettentriebs liegenden Bauteilpunkt, ein Maß für die Betragsdifferenz der Umlenkkräfte - und damit auch für die Riemenkraftdifferenz und letztlich das Kurbelmoment.

In einer weiteren Ausführungsform ist das Übertragungselement über ein Gelenk am Trägerteil gelagert. Die Verwirklichung der Drehachse mit einem Gelenk stellt eine besonders einfache und zuverlässige Möglichkeit dar. Bei Einwirken eines Kurbelmoments auf den Riementrieb und damit betragsmäßig unterschiedlicher Umlenkkräfte auf den Rollenträger würde dieser in eine solche Winkellage einschwenken, in der das aus beiden Umlenkkräften resultierende Kraftmoment um den Schwenk- bzw. Gelenkpunkt verschwindet.

In einer weiteren Ausführungsform ist das Übertragungselement über einen biegeweichen Steg am Trägerteil gelagert, wobei zur Ausbildung der stationären Drehachse in der Mitte des Steges die Länge des Steges weniger als ein Viertel, bevorzugt weniger als ein Fünftel, besonders bevorzugt weniger als ein Zehntel der Höhe des gleichschenkeligen Dreiecks beträgt.

Die Verwendung eines biegeweichen Steges mit erfindungsgemäßen Abmessungen gewährleistet ebenfalls die Ausbildung einer stationären Drehachse. Die Konzentration der Verformung auf einen kleinen Bereich, der wesentlich kleiner ist als der Abstand zwischen Drehachse und der Höhe, auf der die Umlenkrollen liegen, gewährleistet eine definierte und rechnerisch leicht handhabbare Drehbewegung des Übertragungselementes um eine stationäre Drehachse. Durch Variationen in den Abmessungen und der Materialbeschaffenheit kann der Messbereich verändert werden. Zu diesem Zweck wäre lediglich der Steg auszuwechseln.

Bei dieser Ausführungsform des erfindungsgemäßen Messwertaufnehmers wird die Schwenkbarkeit des Übertragungselementes um einen Punkt der Riementrieb-Symmetrieachse nicht durch eine Gelenksverbindung geboten. Die sonst durch eine Gelenksverbindung unbeschränkt gebotene, im Grunde nur geringfügig notwendige Schwenkbarkeit des Übertragungselementes wird an gleicher Stelle durch eine ausgeprägte Querschnittsverschwächung eines riegelförmigen Abschnitts gewährleistet. Die dort stark reduzierte Biegesteifigkeit führt bei Momenteneinwirkung auf den Rollenträger zur Krümmung dieses kurzen "Riegelhalses", damit zur Herausbildung einer eng lokalisierten "Scharnierzone", die aber dennoch die Ausbildung einer einzigen stationären Drehachse gewährleistet.

In einer weiteren Ausführungsform ist die Dicke des Steges kleiner als die Hälfte, bevorzugt kleiner als ein Drittel seiner Länge.

In einer weiteren Ausführungsform wird eine Schwenkbewegung des Übertragungselements um die stationäre Drehachse durch einen mit dem ruhenden Trägerteil starr verbundenen und das Übertragungselement an einem Anschlagpunkt berührenden Kraftsensor verhindert. Das Verschwenken wird somit durch eine Stützkraft verhindert, welche mittels eines Kraftsensors auf das Übertragungselement einwirkt. Der Messwert dieses Sensors, multipliziert mit dem Abstand zwischen Kraftsensor-Angriffspunkt und Gelenkspunkt ergibt das gesuchte Kraftmoment um die stationäre Drehachse des Übertragungselements.

In einer weiteren Ausführungsform steht die Messachse des Kraftsensors im wesentlichen normal zur Verbindungsgeraden zwischen der Drehachse und dem Anschlagspunkt.

In einer weiteren Ausführungsform fällt die stationäre Drehachse mit der die Achse eines Umlaufrades für das umlaufende Zugmittel zusammen.

In einer weiteren Ausführungsform ist als Sensor ein Distanzsensor zur Ermittlung der Verdrehung des Übertragungselementes vorgesehen.

In einer weiteren Ausführungsform steht der Distanzsensor mit dem Übertragungselement in mechanischem Kontakt und arbeitet bevorzugt nach induktivem, kapazitivem oder potentiometrischem Prinzip.

In einer weiteren Ausführungsform ist der Distanzsensor ein berührungsloser, bevorzugt optischer oder induktiver, Sensor.

In einer weiteren Ausführungsform ist zumindest ein Dehnungssensor am biegeweichen Steg zur Bestimmung seiner Krümmung vorgesehen.

In einer weiteren Ausführungsform weist das Übertragungselement einen riegelförmigen Abschnitt auf, der sich entlang der Höhenlinie des Dreiecks in Richtung Trägerteil erstreckt, und wird der Steg durch eine Verengung des riegelförmigen Abschnittes gebildet.

In einer weiteren Ausführungsform ist als Steg ein Blattelement, vorzugsweise aus Federstahl, am Ende des riegelförmigen Abschnittes vorgesehen.

In einer weiteren Ausführungsform weist der riegelförmige Abschnitt an seinem Ende einen Schlitz auf, in dem das Blattelement eingefügt ist.

In einer weiteren Ausführungsform ist das Blattelement an einer Außenseite des Endbereiches des riegelförmigen Abschnittes befestigt, z.B. angeschraubt, angenietet, angeschweißt oder angelötet.

In einer weiteren Ausführungsform ist das Blattelement lösbar mit dem Übertragungselement und dem Trägerteil verbunden.

In einer weiteren Ausführungsform weist das Übertragungselement Viereckform auf, wobei in zwei Eckbereichen jeweils eine Umlenkrolle, in einem weiteren Eckbereich die stationäre Drehachse und im vierten Eckbereich ein Bezugspunkt für den Sensor, z.B. ein Anschlagpunkt für einen Kraftsensor oder ein Messpunkt für einen Distanzsensor, vorgesehen ist

In einer weiteren Ausführungsform weist das Übertragungselement Dreiecksform auf, wobei in zwei Eckbereichen jeweils eine Umlenkrolle und im dritten Eckbereich die stationäre Drehachse vorgesehen sind, wobei an einer weiteren Stelle, vorzugsweise an der Außenkontur des Übertragungselements, ein Bezugspunkt für den Sensor, z.B. ein Anschlagpunkt für einen Kraftsensor oder ein Messpunkt für einen Distanzsensor, vorgesehen ist.

Drei Schenkel können zu einer geschlossenen Dreieckskontur mit höherer mechanischer Stabilität ergänzt werden. Wird an diesem dritten Schenkel ein zur Winkelhalbierenden vorzugsweise paralleler, nach außen weisender, Riegel, z.B. in Form einer Konsole angeordnet und im Bereiche dessen äußeren Endes der Kraftsensor situiert, so ermöglicht dies einen größeren, als Hebellänge wirkenden Abstand zwischen Mess- und Gelenkspunkt, eine geringe auf den Sensor wirkende Stützkraft und damit geringste Abmessungen für den Sensor und dessen Halterung.

In einer weiteren Ausführungsform ist das Übertragungselement V-förmig, wobei an den beiden Schenkelenden jeweils eine Umlenkrolle und im Schnittbereich beider Schenkel die Drehachse vorgesehen sind und wobei an einer weiteren Stelle, vorzugsweise an der Außenkontur des Übertragungselements, ein Bezugspunkt für den Sensor, z.B. ein Anschlagpunkt für einen Kraftsensor oder ein Messpunkt für einen Distanzsensor, vorgesehen ist.

Bei dieser Ausführungsform des erfindungsgemäßen Messwertaufnehmers besteht das Übertragungselement aus zwei in V-Form miteinander verbundenen Schenkeln, wobei sich die Symmetrieachsen von V-Kontur und Riementrieb decken und im Verbindungsbereich der Schenkel die Gelenksverbindung gegenüber dem Rahmen und an beiden freien Schenkelenden je eine Umlenkrolle angeordnet sind. Da das Übertragungselement in sich starr ist, kann der Messort des Kraftsensors vorrangig nach folgenden zwei Prinzipen bestimmt werden:

- Möglichst günstige bzw. einfache Montage des Kraftsensors am starren Rahmenbereichen

- Optimale Ausnutzung des Kraftsensor-Messbereichs: Je näher der Messort dem Gelenkspunkt ist, umso höher ist die notwendige Stütz- und damit Sensorkraft.

In allen Fällen sollte die Messrichtung des Kraftsensors normal zu der durch die Verbindungslinie zwischen Gelenks- und Messpunkt gebildeten Radialrichtung orientiert sein.

Bei einer weiteren Ausführungsform des V-Form- Übertragungselements greift der Kraftsensor nicht unmittelbar an einem der Schenkel an, sondern an einem etwa parallel zur Winkelhalbierenden ins Inneren der V-Kontur hineinragenden stabartigen Riegel.

In einer weiteren Ausführungsform weist das Übertragungselement eine Y-Kontur auf.

In einer weiteren Ausführungsform weist das Übertragungselement eine Dreieckskontur mit einem an diese anschließenden, entlang der Symmetrieachse in Richtung Trägerteil verlaufenden riegelförmigen Abschnitt auf.

In einer weiteren Ausführungsform ist an dem der stationären Drehachse entgegengesetzten Ende des Übertragungselementes ein Riegel vorgesehen, der sich im wesentlichen parallel zur Symmetrieachse erstreckt und einen Bezugspunkt für den Sensor, z.B. einen Anschlagpunkt für einen Kraftsensor oder einen Messpunkt für einen Distanzsensor, trägt.

In einer weiteren Ausführungsform erhält das um die stationäre Drehachse schwenkbare Übertragungselement eine elastische Rückstellwirkung, vorzugsweise durch eine um die Drehachse zentrierte Drehfeder oder eine normal zur Verbindungslinie zwischen der Drehachse und ihrem Angriffspunkt am Übertragungselement orientierte Linearfeder.

Das Ziel der Erfindung wird auch mit einem Ergometer bzw. Sport- oder Trainingsgerät, das durch umlaufende Zugmittel angetrieben wird, erreicht, wobei es einen Messwertaufnehmer der vorbeschriebenen Art aufweist.

Je nach Art der Kalibriermessung kann gleich jene Kalibrierkonstante bestimmt werden, welche den zwangsläufig linearen Zusammenhang zwischen Kurbelmoment und Sensorkraft bzw. gemessene Distanzänderung widerspiegelt.

Der Kraftsensor-Angriffspunkt am Übertragungselement (damit auch die Übertragungselement-Kontur) wird nicht zuletzt von der Möglichkeit bestimmt, den Kraftsensor bestmöglich - und getrennt vom Übertragungselement - am Ergometerrahmen zu befestigen, sei es direkt oder indirekt. Das Übertragungselement kann z.B. vollflächig ausgeführt werden, vorzugsweise wird dann seine Außenkontur am Kraftsensor anliegen.

Anstelle der oben ausgeführten Konturen des Übertragungselements können auch andere, insbesondere dem Raumangebot des Ergometerrahmens angepasste Konturen ausgeführt werden, ebenso sind vollflächige Übertragungselemente mit ebenem oder auch gewölbtem Flächenverlauf denkbar.

Bei allen Ausführungsformen erfindungsgemäßer Übertragungselemente ist es hinsichtlich ihrer Funktion ohne Belang, ob ihre gelenkige Anbindung an das Ergometer, von der Verbindungslinie der beiden Umlenkrollen aus gesehen, auf der Seite von Kurbeln und Riemenscheibe oder auf der Seite von Schwungscheibe bzw. Bremssystem situiert ist.

Bezüglich der Variante mit dem biegeweichen Steg wird noch folgendes ausgeführt. Eine lokal reduzierte Biegesteifigkeit kann anstelle einer lokalen Querschnittsreduktion an einem sonst durchgängig verlaufenden Riegel auch dadurch erreicht werden, dass dieser Riegel auf kurze Distanz unterbrochen und beide einander gegenüberliegende Riegelenden durch ein erheblich schmäleres, stegartiges Element verbunden werden. Letzteres kann auch aus leichter verformbarem Material bestehen, auch kann die hohe, jedoch stets elastische Verformbarkeit eines Federblatts für dieses Stegelement genützt werden. Die Verbindung des Steg- bzw. Blattelements mit den angrenzenden Riegelenden kann beispielsweise dadurch erfolgen, dass ersteres in Einschlitzungen der letzteren eingefügt wird. Ebenso kann das Steg- oder Blattelement an der oberen oder unteren Außenkontur beider Riegelenden angeschraubt, angeschweißt, angelötet oder auf ähnliche Weise plan verbunden werden. Schließlich ist auch denkbar, dass mittels des Steg- bzw. Blattelements nicht zwei Riegel-Stirnflächen verbunden werden, sondern das eigentliche Riegelende direkt am Ergometerrahmen bzw. einem geeigneten Anschlusselement befestigt wird.

Im Falle einer auf lokal reduzierter Biegesteifigkeit beruhenden Verdrehbarkeit des Rollenträgers kann das auf diesen durch zwei Umlenkkräfte ausgeübte Kraftmoment auch dadurch gemessen werden, dass das Einschwenken des Rollenträgers in eine benachbarte Winkellage nicht durch die Stützkraft eines Kraftsensors verhindert, sondern bewusst ermöglicht wird und anstelle der entfallenden Stützkraft charakteristische Parameter der Schwenkbewegung als Maß für das einwirkende Kraftmoment verwendet werden.

Als solche Parameter kommen beispielsweise die Verschiebung spezifischer Körperpunkte des Übertragungselementes bzw. die Absenkung von bevorzugt auf dessen Symmetrieachse liegenden Punkten in Frage. Verschiebungsweg bzw. Absenkdistanz können beispielsweise durch berührende, etwa induktive bzw. kapazitive Abstandsaufnehmer oder nicht berührend, etwa mittels optischer Verfahren, u. a. lasertechnisch gemessen werden.

Ein weiterer, die Übertragungselement-Schwenkbewegung charakterisierender Parameter ist jene Größe, welche die kinematische Voraussetzung dafür ist - die Krümmung des verschwächten Riegelhalses bzw. eingefügten Steg- oder Blattelements.

Diese Krümmung kann beispielsweise mittels Dehnmessstreifen-Technik erfasst werden.

In weiteren Ausführungsformen der Erfindung ist der mit dem Übertragungselement zusammenwirkende Sensor auf oder in dem Übertragungselement angeordnet. Der Sensor misst dabei die Verformung des Übertragungselementes selbst, wie Biegung, Stauchung oder Dehnung, oder innere Reaktionen (Kräfte, Momente, etc.) des aus Übertragungselement und Sensor gebildeten mechanischen Systems, die durch die Zugmittel verursacht werden. Der Sensor kann als Zugkraftsensor, Biegemoment-Sensor, Querkraftsensor, etc. ausgebildet sein und ist direkt am Übertragungselement angeordnet oder in diesem integriert.

Bei diesen Ausführungsformen wird eine Schwenkbewegung des Rollenträgers weder vollständig behindert - wie etwa durch einen stützend angelegten Kraftsensor - noch in nur geringem Ausmaß zugelassen - wie etwa durch die elastische Stützwirkung eines Biegesteges - , sondern frei zugelassen. Das Übertragungselement wird dann um einen geringen Schwenkwinkel in eine solche Winkellage einschwenken, bei der sich die Drehwirkungen beider Umlenkkräfte bezüglich der Übertragungselement-Drehachse gegenseitig aufheben. In dieser Gleichgewichtsposition lässt sich jede der beiden annähernd gleich großen Umlenkkräfte als Maß für das einwirkende Kurbelmoment verwenden. Bei einer Ausführungsform besteht das Übertragungselement aus einem sich entlang der Symmetrieachse erstreckenden, riegelartigen oder auch flächigen Mittelteil und zwei davon abstehenden Armen bzw. Konsolen, an deren Ende je eine Umlenkrolle situiert ist. In einem der beiden Arme ist ein Zugkraft-Sensor zur Messung der von der benachbarten Rolle eingeleiteten Umlenkkraft eingefügt. Ebenso kann der Zugkraft-Sensor den Endbereich des betreffenden Arms repräsentieren und zur Halterung bzw. Lagerung der Umlenkrolle entsprechend ausgebildet sein. In beiden Fällen ist es günstig, wenn die Messrichtung des Kraftsensors möglichst mit der Richtung der Umlenkkraft übereinstimmt.

Ebenso kann das Übertragungselement - ohne Strukturierung in Mittelteil und abstehende Arme - flächig, in grober Beschreibung in Dreieckform ausgebildet sein, wobei in einem Eckbereich die Übertragungselement-Drehachse, in einem zweiten eine direkt befestigte Umlenkrolle und im dritten Eckbereich die zweite, mittels eines Kraftsensors gelagerte Umlenkrolle situiert ist.

Wird das Übertragungselement im Wesentlichen durch zwei in V-Form zusammengefügte, stab- bzw. riegelartige Schenkel repräsentiert, mit je einer Umlenkrolle an den freien Schenkelenden und der Übertragungselement-Drehachse im Verbindungsbereich der beiden Schenkel, dann haben die beiden Umlenkkräfte die Tendenz, diese V-Kontur auseinanderzuspreizen. Daher lassen sich zwei für diese Belastungsart charakteristische, innerhalb der Schenkel wirksame Schnittkräfte als Maß für die Umlenkkräfte und damit für das Kurbelmoment heranziehen: Querkraft und Biegemoment.

Bei einer Ausführungsform wird an beliebiger Stelle eines der beiden Schenkel ein Querkraftsensor eingefügt, bei einer anderen wird das freie Schenkelende durch einen Querkraftsensor repräsentiert, der zur Aufnahme einer Umlenkrolle ausgebildet ist. In beiden Fällen ist es günstig, wenn Schenkel-Längsachse und Umlenkkraft möglichst normal zueinander orientiert sind.

Zur Messung des im Schenkelquerschnitt wirksamen, zu dessen Abstand von der Umlenkrolle proportionalen Biegemoments kann ein Biegemoment-Sensor in den an dieser Stelle unterbrochenen Schenkel eingefügt werden. Ebenso kann ein beschränkter, von der Umlenkrolle möglichst weit entfernter Schenkelabschnitt in einen Biegemoment-Sensor umgebaut werden. Etwa indem der betreffende Schenkel auf beschränkte Länge durch Querschnittsverschwächung auf einen schmalen, stegartigen Hals reduziert wird, welcher bei Einwirkung der Umlenkkraft eine leichte Krümmung erfährt. Letztere kann mittels Dehnungs-Sensorik messtechnisch erfasst und als Maß für das lokale Biegemoment, somit auch für Umlenkkraft und Kurbelmoment verwendet werden. In einer weiteren Ausführungsform wird der stegartige Hals nicht durch lokale Reduktion der ursprünglichen Schenkelbreite realisiert, sondern durch Zweiteilung des Schenkels, Einschlitzen der gegenüberliegenden Schenkelenden parallel zur Schenkel-Längsachse und Einfügen eines mittels Dehnungs-Sensorik ausgestatteten Blattelements. Ebenso kann dieses Blattelement die beiden ungeschlitzten Schenkel-Endbereiche in der Weise verbinden, dass es, an der Außenkontur beider Schenkel-Endbereiche anliegend, mit diesen verschraubt, verschweißt, verlötet oder verklebt ist.

Bei allen Ausführungsformen erfindungsgemäßer Messwertaufnehmer ist es denkbar, dass die Umlenkung sowohl des oberen wie auch des unteren Riemens nicht mittels je einer Rolle, sondern etwa mittels zweier, bevorzugt benachbarter Rollen erfolgt.

Im Folgenden werden erfindungsgemäße Kurbelmoment-Messwertaufnehmer für die Anwendung bei Riementrieben ausgeführt. Die Ausführungen gelten jedoch ohne Einschränkungen auch für - insbesondere Kettenblatt und Ritzel verbindende - Kettentriebe, oder auch für Ausführungen für umlaufende Bänder, Seile u. ä.

Die Erfindung wird im Folgenden anhand von in Zeichnungen schematisch dargestellten Ausführungsbeispielen näher erläutert. Dabei zeigt

Fig. 1 einen erfindungsgemäßen Messwertaufnehmer mit einem Übertragungselement in viereckiger Kontur,
Fig. 2 und 3 eine Variante mit V-förmigem Übertragungselement,

Fig. 4 eine Variante mit dreieckförmigem Übertragungselement,

Fig. 5 bis 13 eine Variante mit einem biegeweichen Steg zwischen Übertragungselement und Trägerteil,

Fig. 14 bis 17 eine Variante mit Gelenksanbindung des Übertragungselements und in das Übertragungselement integrierter Zugkraft-, Querkraft- oder Biegemoment-Sensorik.

Der erfindungsgemäße Messwertaufnehmer 1 für das Kurbelmoment, wie in Fig. 1 dargestellt, besteht aus einem flächigen, im Wesentlichen viereckigen, zwischen Riemenscheibe 2 und Schwungscheiben-Antriebsrolle 3 eingefügten Rollenträger 4 für zwei - gegenüber den freien Riemenabschnitten 5 jeweils innen liegende - Umlenkrollen 6, welche in zwei Eckbereichen 7 des Übertragungselements 4 situiert sind. Letzterer ist im Bereiche seines dritten Eckbereichs 8 mittels einer auf der Riementrieb-Symmetrieachse S situierten Gelenksverbindung 10 am Ergometerrahmen befestigt, wobei die Schwenkbewegung des Übertragungselements um die stationäre Drehachse 10 des Gelenks durch einen das Übertragungselement im Bereiche seines vierten Eckbereichs 9 berührend situierten Kraftsensor 11 verhindert wird. Die Anbindung von Gelenk 10 und Kraftsensor 11 an den Ergometerrahmen erfolgt nicht direkt, sondern mittels einer an der Lagerhalterung 12 des Ergometerrahmens starr befestigten Konsole 13, die im vorliegenden Beispiel als in Bezug auf das umlaufende Zugmittel ruhender Trägerteil fungiert.

Bei der dargestellten Ausführungsform liegen Gelenk 10 und Kraftsensor 11 - von der Verbindungslinie der Umlenkrollen 6 aus gesehen - auf Seite der Schwungscheiben-Antriebsrolle 3. Ebenso könnte das Gelenk 10 auf Seite der Kurbelachse bzw. Riemenscheibe 2 liegen und - wie auch Kraftsensor 11 - an dort situierten Rahmenbereichen befestigt sein.

Beim in Fig. 2 dargestellten, erfindungsgemäßen Messwertaufnehmer 15 besteht das Übertragungselement 16 aus zwei in V-Form miteinander verbundenen Schenkeln 17, an deren freien Enden je eine Umlenkrolle 6 und in deren Verbindungsbereich die Gelenksverbindung 10 angeordnet ist. Der Messwertaufnehmer 15 gemäß Fig. 2 unterscheidet sich gegenüber jenem von Fig. 1 noch in folgenden Punkten:

a) Die Umlenkrollen 6 sind nun außerhalb der frei laufenden Riemenbereiche 5 angeordnet und lenken diese daher nach innen hin ab bzw. um.
b) Als Achse für das Schwenkgelenkt 10 dient die ohnehin für Schwungrad, Bremssystem und zugehörige Antriebsrolle 3 vorgesehene Achse. Dieses Funktionsmerkmal ist ebenso für den Messwertaufnehmer 1 gemäß Fig. 1 denkbar.
c) Es sind zwei mögliche Positionen für einen Kraftsensoren 11 eingetragen, die Befestigungsvorrichtungen gegenüber dem Ergometerrahmen sind jedoch nicht dargestellt.

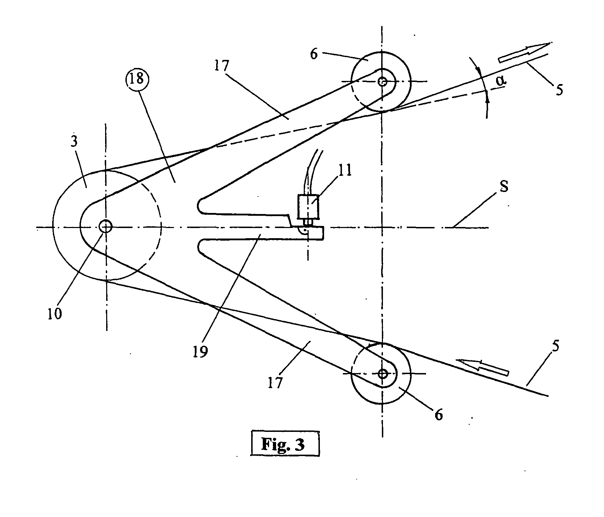

Das erfindungsgemäße Übertragungselement 18 in Fig. 3 unterscheidet sich vom Übertragungselement 16 in Fig. 2 im Wesentlichen dadurch, dass der Kraftsensor 11 an einer im Bereiche der Winkelhalbierenden und etwa parallel zu dieser in die V-Kontur hineinragenden, riegelartigen Konsole 19 angreift.

Das erfindungsgemäße Übertragungselement 21 gemäß Fig. 4 geht aus jenem gemäß Fig. 3 dadurch hervor, dass die beiden zu einer V-Kontur verbundenen Schenkel 17 durch einen im Wesentlichen normal zur Winkelhalbierenden orientierten dritten Schenkel 22 zu einem geschlossenen Rahmenwerk mit der Kontur eines gleichschenkeligen Dreiecks ergänzt werden und zur Abstützung auf einen Kraftsensor 11 eine der Konsole 19 in Fig. 3 ähnliche, riegelartige und mit der Winkelhalbierenden etwa fluchtend verlaufenden Konsole an den Schenkel 22 starr angebunden ist. Alternativ zu dieser Abstützungsmöglichkeit sind in Fig. 4 zwei weitere Kraftsensor-Positionen eingetragen.

Fig. 5 zeigt einen erfindungsgemäßen Messwertaufnehmer 25 für das Kurbelmoment, bei dem die Verdrehbarkeit des Übertragungselements nicht durch eine Gelenksverbindung gegenüber dem Ergometerrahmen, als ruhendem Trägerteil, gewährleistet wird, sondern durch eine auf lokaler Riegelhals-, Steg- oder Blattkrümmung beruhenden Scharnierzone. Deren Funktion sei anhand des Übertragungselements 26 dargestellt, das jenem des Übertragungselements 18 von Fig. 3 ähnlich ist, er könnte aber auch jenen in Fig. 1, 2 oder 4 ähnlich sein.

Die das Übertragungselement 26 (wie auch 18) kennzeichnenden V-förmig angeordnete Schenkel 17 werden in deren auf der Symmetrieachse S liegenden Verbindungsbereich durch einen zur Symmetrieachse im wesentlichen parallelen riegelförmigen Abschnitt 27 fortgesetzt, welcher entweder unmittelbar am Ergometerrahmen befestigt ist oder - wie in Fig. 5, ähnlich wie in Fig. 1 - mittels einer flächigen Verbreiterung 28 auf der Lagerhalterung 14 für Schwungscheibe, Bremssystem und Antriebsrolle 3 angebracht, z.B. angeschraubt ist.

Kurz vor dem Riegel-Befestigungsbereich bzw. der Verbreiterung 28 wird - normal zur Schwenkebene gesehen - die Stärke des riegelförmigen Abschnittes 27 auf beschränkter Länge stark reduziert, sodass es zur Herausbildung eines relativ schmalen Riegelhalses 29 kommt, welcher die benachbarten, nicht abgeschwächten Riegelabschnitte 27a und 27b stegartig verbindet.

Bei Einwirkung eines Kurbelmoments und damit eines Drehmoments auf das Übertragungselement 26 würde - ohne Abstützung desselben durch den Kraftsensor 11 - der Hals 29 als Scharnierzone wirken und das in Fig. 5 dargestellte Übertragungselement eine Schwenkbewegung erfahren, und zwar um die im Zentrum des Halses 29 befindliche Drehachse 30.

Auch wenn eine echte Schwenkbewegung durch den Kraftsensor 11 verhindert wird, gilt: Bei gegebener Dimensionierung des Halses 29 ist dessen Beanspruchung umso niedriger bzw. kann bei gegebenem Kurbelmoment der Hals umso schwächer dimensioniert werden, je näher der Anschlagpunkt des Kraftsensors 11 auf dem Übertragungselement dem Schnittpunkt P der beiden Umlenkkraft-Wirkungslinien und damit der beider Winkelhalbierenden W der geknickten Riemen-Umlenkkonturen ist.

In Fig. 6 ist ein die Drehachse 30 enthaltender Abschnitt des riegelförmigen Abschnitts 27 dargestellt. Die Scharnierzone wird jedoch nicht durch lokale Querschnittsreduktion des riegelförmigen Abschnitts 27, sondern durch Auftrennen desselben in zwei Abschnitte 31 a und 31 b sowie Verbinden derselben mittels eines schmalen Steg- bzw. Blattelements realisiert. In Fig. 6 werden die Stirnflächen der Riegelbereiche 31a und 31 b parallel zur Symmetrieachse S eingeschlitzt und durch Einfügen eines schmalen Blattelementes 32, etwa aus Federstahl, miteinander verbunden.

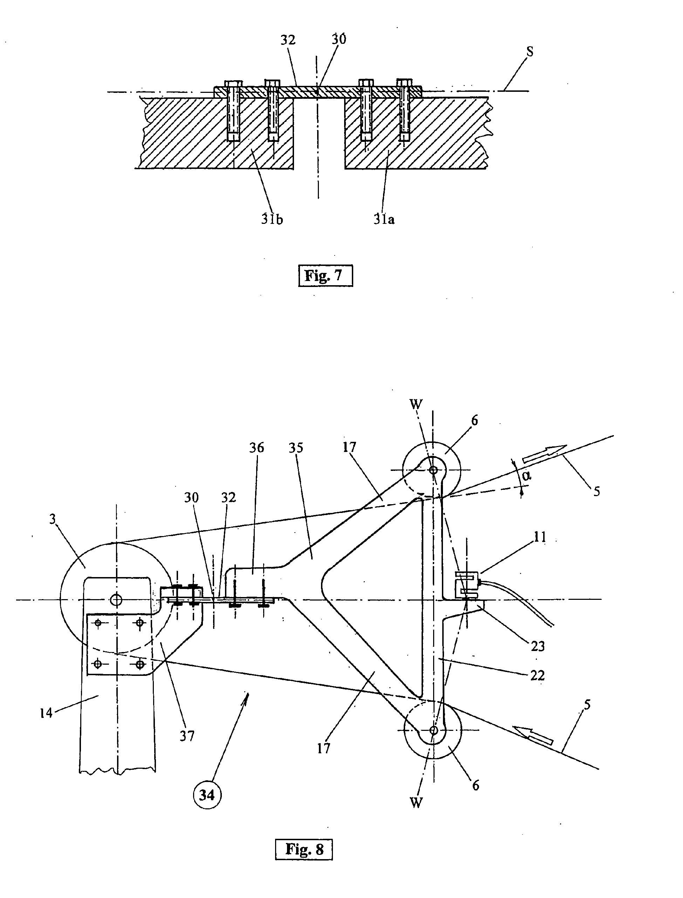

In Fig. 7 ist das Blattelement 32, an der oberen Außenkontur der beiden Riegelbereiche 31 a und 31 b anliegend, in - diese Abschnitte distanzierender Weise - angeschraubt. Ebenso wäre eine Niet-, Schweiß-, Löt- oder sonstige Verbindung möglich.

Fig. 8 zeigt einen erfindungsgemäßen Messwertaufnehmer 34, dessen Übertragungselement 35 dem Übertragungselement 21 von Fig. 4 ähnlich ist und dessen zur Drehachse 30 gerichteter riegelförmiger Abschnitt 36 durch ein Blattelement 32 an einem mit dem Ergometerrahmen starr verbundenen Bauteil verbunden ist. In Fig. 8 ist dies beispielsweise eine Konsole 37, welche ihrerseits an der Halterung 14 für Schwungscheibe, Bremssystem und deren Antriebsrolle 3 starr befestigt ist. Anstelle von in Fig. 8 dargestellten Schraubverbindungen könnten - insbesondere zwischen dem riegelförmigen Abschnitt 36 und dem Blattelement 32 - auch andere Anschlussarten wie Nieten, Löten oder Schweißen treten, ebenso könnte das Blattelement 32 in den riegelförmigen Abschnitt 36 integriert, mit diesen also in einem Stück gefertigt sein.

Wesentlich bei allen Ausführungsformen ist, dass die im Vergleich zum riegelförmigen Abschnitt 36 extrem niedrigere Biegesteifigkeit des Blattelements 32 eine Scharnierfunktion desselben gewährleistet, sodass bei Momenteneinwirkung auf den Rollenträger 35 eine Schwenkbewegung desselben mit der Drehachse 30 als Drehungspol möglich ist - auch wenn eine solche durch den Kraftsensor 11 verhindert wird.

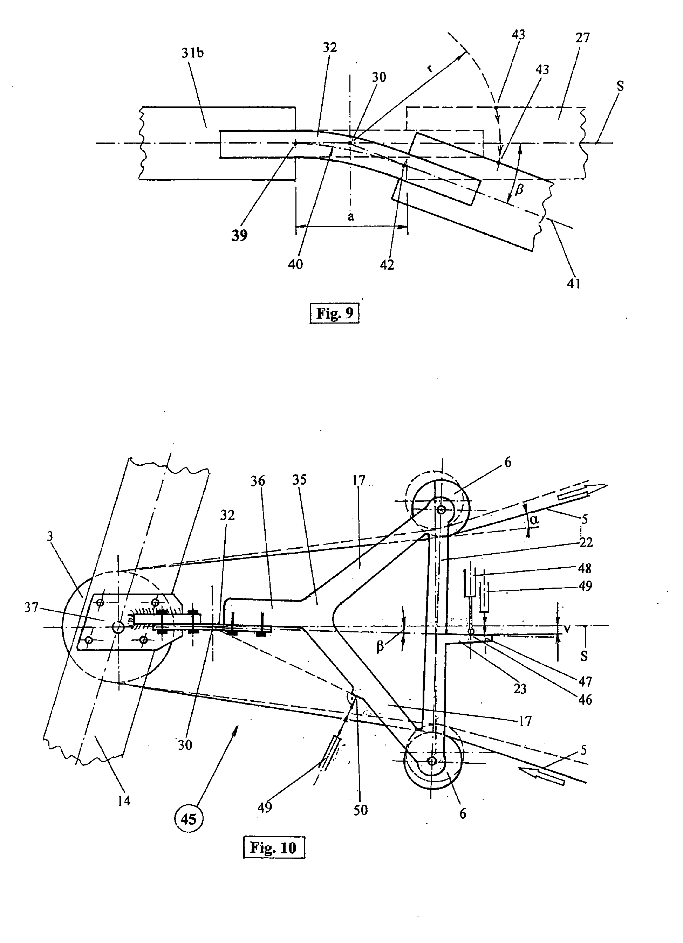

Anhand Fig. 9 wird der Nachweis erbracht, dass eine durch Scharnierfunktion von Steg- bzw. Blattelementen vermittelte Übertragungselement-Schwenkbewegung kinematisch identisch ist mit einer durch Gelenksverbindung ermöglichten Drehbewegung.

Das durch die Umlenkkraft-Differenz bewirkte Biegemoment nimmt entlang dem riegelförmigen Abschnitt 27 und dem Blattelement 32 bis zum Einspannpunkt 39 linear zu. Die Längsachse des Blattelements krümmt sich dabei zu einer quadratischen Parabel 40 mit vertikaler Achse und Punkt 39 als Scheitelpunkt - Anteile dritter Ordnung fallen, da die Längsabmessung a des Blattelements deutlich kleiner ist als der Horizontalabstand des Blattelements gegenüber den Umlenkrollen, nicht ins Gewicht. Die Achse 41 des Riegels 27 schließt im Parabelendpunkt 42 tangential und geradlinig an. Für eine quadratische Parabelfunktion ist charakteristisch: Verlängert man die Tangente 41 in den Scharnierbereich zurück, dann schneidet sie die unverschwenkte Symmetrieachse S exakt im Symmetriepunkt, der Drehachse 30, des Scharnierbereichs bzw. Blattelements. Die Ausschwenkung des riegelförmigen Abschnitts 27 ist also dieselbe, als hätte dieser um Punkt 30 als Gelenkspunkt eine reine Drehbewegung vollführt. Der Symmetriepunkt, schon bisher als Drehachse 30 bezeichnet, fungiert daher für alle rechts von Punkt 42 gelegenen Starrkörperbereiche des Übertragungselements als Drehpunkt und kann daher kinematisch mit dem Gelenkspunkt 10 in Fig. 1 bis 4 gleichgesetzt werden. Der Körperpunkt 43 etwa bewegt sich bei einer Schwenkbewegung des Übertragungselements auf einer Kreisbahn mit Radius r um die Drehachse 30. Die obigen Feststellungen gelten uneingeschränkt auch für solche Ausführungen, bei denen das Steg- oder Blattfundament 32 nicht in der Längsachse eines riegelförmigen Abschnitts (etwa 27), sondern an dessen Außenkontur anliegend oder in sonstiger Weise an diesem befestigt ist. Wesentlich ist jedoch, dass die Symmetrieachse des Steg- oder Blattelements fluchtend mit jener des Riementriebs verläuft.

Es sei betont, dass in Fig. 9 die Krümmung des Steg- bzw. Blattelements 32 sowie der daraus resultierende Drehwinkel β des Übertragungselements bzw. dessen riegelförmigen Abschnitts 27 stark überhöht dargestellt sind.

Der erfindungsgemäße Messwertaufnehmer 45 in Fig. 10 unterscheidet sich vom Aufnehmer 34 in Fig. 8 im Wesentlichen durch das Fehlen eines stützenden Kraftsensors, da eine Schwenkbewegung des Übertragungselements 35 um die Drehachse 30 mit Absicht zugelassen wird. Die Dimensionierung des Blattelementes sollte - bei vorgegebenen Werten von Kurbelmoment, damit Umlenkkraft-Differenz und schließlich Momentenwirkung um die Drehachse 30 - gewährleisten, dass das Blattelement trotz ausreichendem Schwenkwinkel ausschließlich im elastischen Bereich beansprucht und verformt wird. Insbesondere Blattelemente aus Federstahl ermöglichen höhere Schwenkwinkel als sie messtechnisch notwendig sind.

Prinzipiell könnte der Drehwinkel β gemessen und als Maß für das verursachende Kurbelmoment verwendet werden. Günstiger ist es jedoch, die mit der Schwenkung des Übertragungselementes um die Drehachse 30 verbundenen Schwenk- bzw. Verschiebungswege charakteristischer Punkte des Übertragungselements zu verwenden. Handelt es sich um - im unbelasteten Zustand - auf der Riementrieb-Symmetrieachse gelegene Körperpunkte, so ist die Verwendung der Vertikalabsenkung solcher Punkte nahe liegend.

Im Sinne größtmöglicher Messgenauigkeit sollten diese Bezugspunkte auf - bezüglich der Drehachse 30 - großem "Radius" liegen, was etwa bei den auf der Oberkante des Riegels 23, letzterer z.B. in Form einer Konsole ausgebildet, situierten Punkten 46 und 47 der Fall ist (Fig. 10).

Die Messung der Vertikalabsenkung v kann mit durchaus herkömmlicher Sensorik erfolgen:

- Bei Bezugspunkt 46, Fig. 10, ist ein berührender induktiver Sensor 48 eingetragen, es könnte aber auch ein potentiometrischer oder kapazitiver Sensor, in beiden Fällen berührend, sein.

- Für Bezugspunkt 47 ist ein berührungsloser optischer Sensor 49, etwa auf Lasertechnik basierend, eingetragen, es bieten sich aber auch andere berührungslose Messverfahren, etwa induktive an.

Der Vollständigkeit halber ist auch eine Messvariante eingetragen, bei welcher der Schwenk- bzw. Verschiebungsweg eines im Ausgangszustand nicht auf der Riementrieb-Symmetrieachse liegenden Übertragungselementpunktes 50 gemessen wird - etwa mittels eines optischen Sensors 49.

Der Messbereich des jeweils verwendeten Abstandssensors kann für unterschiedliche Einsatzbereiche des Ergometers und damit unterschiedliche Kurbelmoment-Grenzwerte dadurch optimal ausgenützt werden, dass Steg- bzw. Blattelemente mit unterschiedlicher Biegesteifigkeit, etwa zufolge verschiedener Blattdicke, eingebaut bzw. getauscht werden können.
In Fig. 10 ist der Scharnierbereich - ähnlich wie in Fig. 8 - durch ein am riegelförmigen Abschnitt 36 befestigtes, im gegebenen Fall angeschraubtes Blattelement 32 realisiert. Ebenso könnte die Scharnierfunktion durch einen stegartigen Riegelhals 29 gemäß Fig. 5 oder gemäß Fig. 6 durch ein in zwei getrennte, eingeschlitzte Riegelenden 31 a und 31b eingefügtes Blattelement 32 gewährleistet sein.

Die Verschiebung, etwa Absenkung charakteristischer Körperpunkte des Übertragungselements kann auch dann als Maß für das Kurbelmoment herangezogen werden, wenn - wie in Fig. 1 bis 4 - das Übertragungselement mittels Gelenk 10 am Ergometerrahmen drehbar gelagert ist, jedoch mittels eines Federelements für eine elastische Rückstellkraft auf das Übertragungselement gesorgt wird. Dafür kommen sowohl Linearfedern als auch einer Drehfedern in Frage.

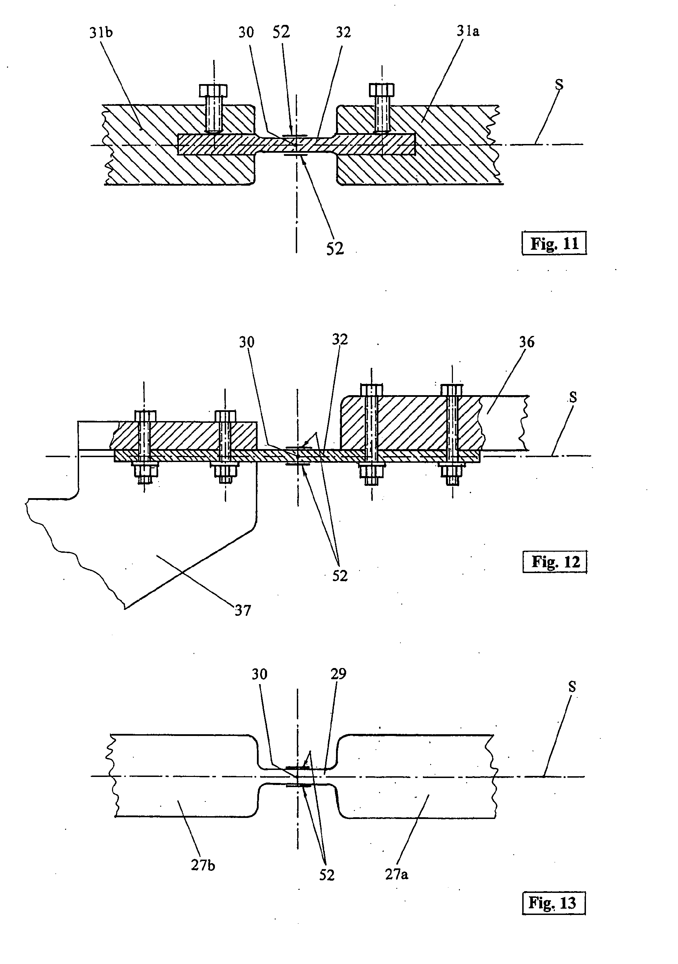

Fig. 11 bis 13 zeigen erfindungsgemäße Ausführungsdetails im Bereiche der Drehachse 30, bei welchen die Drehbewegung des Übertragungselements nicht anhand der Verschiebungswege geeigneter Körperpunkte ermittelt wird, sondern durch die messtechnische Erfassung der diese Schwenkbewegung ermöglichenden Krümmung des Steg- bzw. Blattelements 29 bzw. 32. Diese Krümmung wird am einfachsten durch Messung der damit verbundenen Dehnung auf der einen sowie Stauchung auf der gegenüberliegenden Konturfläche des Steg- bzw. Blattelements gewonnen. Dehnungs- und Stauchungswerte können entweder mittels angeklebter piezoresistiver Dehnmessstreifen (DMS) oder induktiver Dehnungslamellen (induktive Dehnmessstreifen) gemessen werden - beide möglichen sensorischen Elemente werden in Fig. 11 bis 13 unter Pos. 52 dargestellt bzw. bezeichnet.

Fig. 11 stellt dabei eine mittels Dehnungssensorik ausgestattete Scharnierzone dar, welche durch ein in zwei getrennte, eingeschlitzte Riegelenden 31a und 31b eingefügtes, austauschbares Blattelement 32 gekennzeichnet ist, Fig. 12 eine ähnlich adaptierte Scharnierzone für ein am riegelförmigen Abschnitt 36 befestigtes, im gegebenen Fall angeschraubtes, jedenfalls austauschbares Blattelement 32, schließlich zeigt Fig. 13 einen mit Dehnungssensorik applizierten stegartigen Riegelhals 29.

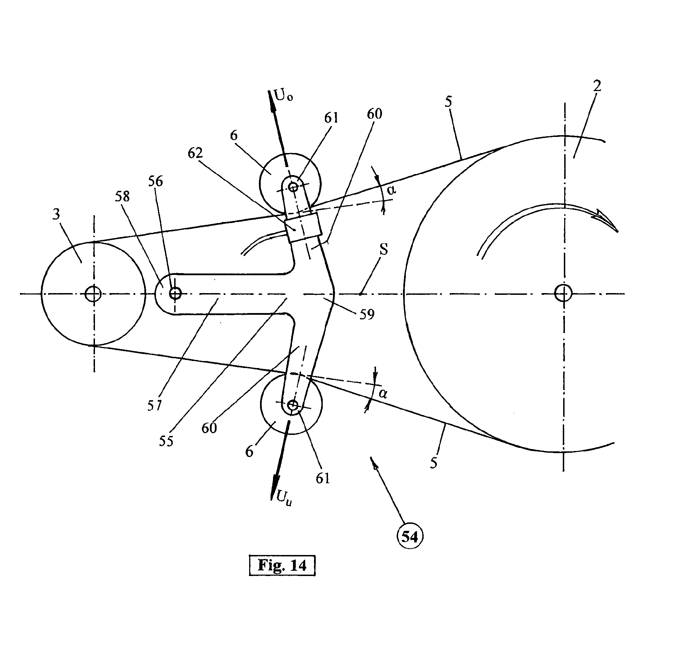

Fig. 14 zeigt als weitere Variante der Erfindung einen Messwertaufnehmer 54, dessen Übertragungselement 55 im Gelenk 56 - mangels jeglicher Abstützung gegenüber starren Rahmenbereichen - frei drehbar gelagert ist, dessen Winkellage sich daher im Kräftespiel beider Riemenabschnitte 5 in der Weise einspielen kann, dass sich die von beiden Umlenkrollen 6 auf das Übertragungselement 55 um den Gelenkspunkt 56 ausgeübten Drehwirkungen gegenseitig aufheben. In der Ausführung des Messwertaufnehmers 54 dient die obere Umlenkkraft $U_o$ als Maß für das einwirkende Kurbelmoment (ebenso lässt sich die untere Umlenkkraft $U_u$ verwenden).

Das Übertragungselement 55 besteht aus einem sich entlang der Symmetrieachse S erstreckenden riegelartigen Mittelteil 57, in dessen der Schwungscheiben-Rolle 3 zugewandtem Endbereich 58 das Gelenk 56 situiert ist und an dessen anderem Ende 59 zwei zu den Riemenabschnitten 5 orientierte Arme 60 starr angebunden sind, in deren Endbereichen 61 die Umlenkrollen 6 gelagert sind. Im oberen Arm 60 ist zwecks Messung der Umlenkkraft $U_o$ ein Zugkraftsensor 62 beliebiger Funktionsweise eingefügt, dessen Messachse möglichst in Richtung von $U_o$ weisen soll.

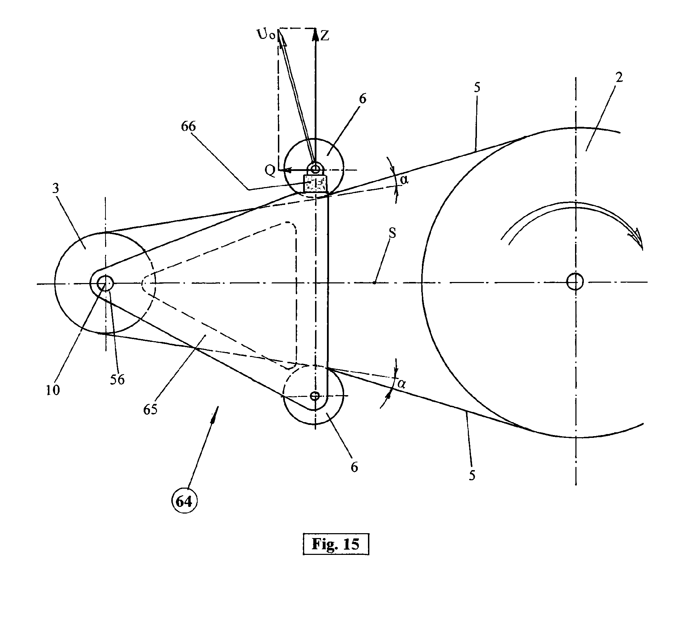

Der Einfachheit halber ist in Fig. 14 der als Trägerteil fungierende, das Gelenk 56 aufnehmende Bauteil bzw. Bereich des Ergometerrahmens nicht dargestellt. Ferner ist der Messwertaufnehmer 54 in seiner Ausgangsposition dargestellt und nicht in der zufolge des Kurbelmoments geringfügig gegen den Uhrzeigersinn verschwenkten Winkellage. Dies gilt auch für die Fig. 15, 16 und 17.

Der in Fig. 15 dargestellte Messwertaufnehmer 64 unterscheidet sich vom Aufnehmer 54 gemäß Fig. 14 - neben dem Umstand, dass die Drehachse der Schwungscheiben-Rolle auch als Drehachse 10 des Übertragungselements 65 dient - vor allem dadurch, dass dessen Übertragungselement 65 flächig sowie in Dreiecksform ausgeführt ist, wobei ein Eckbereich die Drehachse 10 einschließt, im zweiten eine direkt befestigte Umlenkrolle 6 und im dritten Eckbereich eine weitere Umlenkrolle 6 mittels eines entsprechend ausgebildeten Kraftsensors 66 gelagert ist. Weicht - wie in Fig. 15 - die Messachse des Kraftsensors von der Richtung der zugehörigen Umlenkkraft $U_o$ erheblich ab, dann ist auch deren tatsächlich gemessene Zugkraftkomponente Z als Maß für das Kurbelmoment geeignet, wegen der ebenfalls aufzunehmenden Querkomponente Q muss der Kraftsensor jedoch Querkraft-unempfindlich ausgeführt sein. In Fig. 15 ist in strichlierter Darstellung eine mögliche Ausnehmung des sonst vollflächigen Übertragungselements angedeutet.

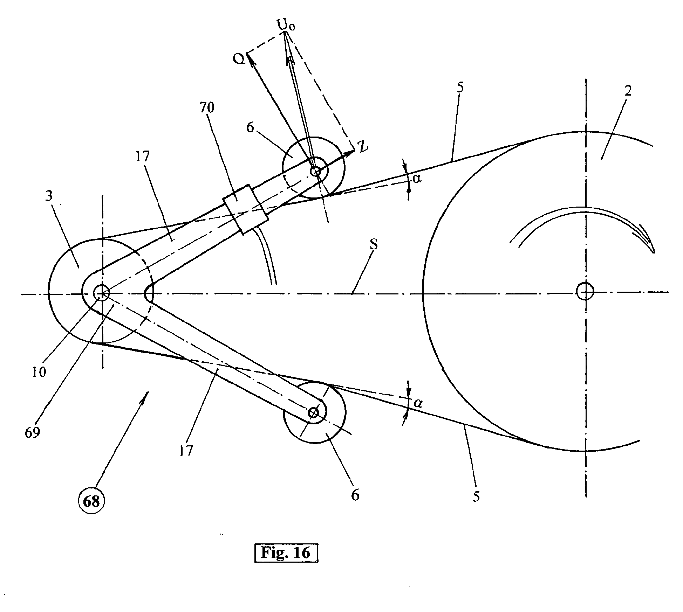

Das in V-Kontur abgewinkelte Übertragungselement 69 des Messwertaufnehmers 68 von Fig. 16 entspricht weitgehend dem Übertragungselement 16 des Aufnehmers 15 gemäß Fig. 2, es besitzt jedoch keinen Anschlag für einen Kraftsensor, dafür ist in einen der beiden Schenkel 17 (gemäß Fig. 16 in den oberen) ein Querkraftsensor 70 eingefügt, der die zu seiner Messachse parallele und damit zur Schenkel-Längsachse normale Querkomponente Q der Umlenkkraft $U_o$ erfasst. Günstig ist es daher, wenn Schenkel-Längsachse und Umlenkkraft zueinender möglichst normal orientiert sind.

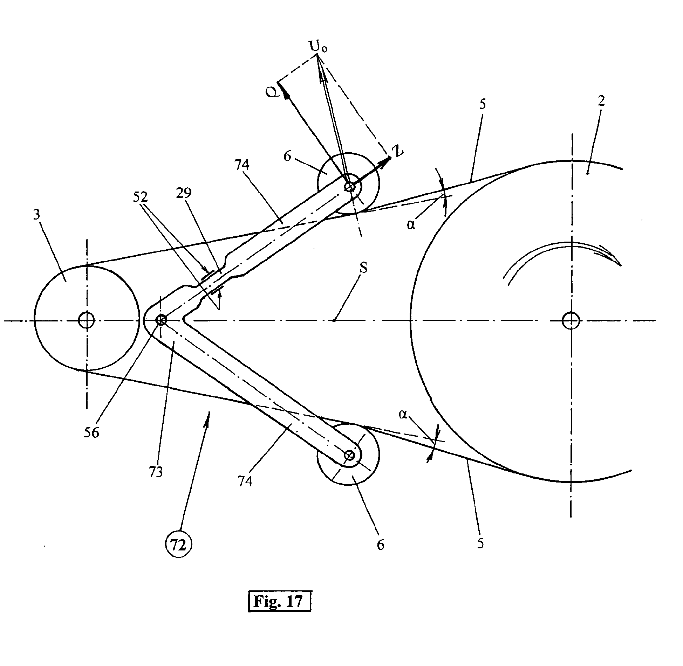

Fig. 17 zeigt einen Messwertaufnehmer 72 mit ebenfalls abgewinkeltem Übertragungselement 73, bei dem die von der Umlenkkraft $U_o$ auf den oberen Schenkel 74 ausgeübte Biegewirkung in möglichst großer Entfernung von der oberen Umlenkrolle 6 mittels Biegemoment-Sensorik - mit prinzipiell beliebiger Funktionsweise - erfasst wird. Dieser Sensor wird in Fig. 17 ähnlich wie in Fig. 5 und 13 durch einen auf beschränkte Länge durch Breitenreduktion realisierten, mit Dehnungssensorik 52 bestückten, stegartigen Schenkelhals 29 in bereits dargestellter Wirkungsweise realisiert.

Ein stegartiger Schenkelhals kann auch in weitgehender Analogie zu Fig. 6 durch Zweiteilung des Schenkels 74, Einschlitzen der beiden einander gegenüberliegenden Schenkel-Endbereiche und Einfügen eines Blattelements 32 geringer Dicke realisiert werden. Ebenso kann in Übereinstimmung mit Fig. 11 das Blattelement 32 in beide Schenkel-Endbereiche in jederzeit lösbarer sowie mittels Schrauben fixierbarer Weise eingefügt werden, damit das Blattelement zwecks Anpassung an verschiedenen Lastniveaus austauschbar wird. Eine Ausführung gemäß Fig. 12 ist ebenfalls möglich. In allen diesen Ausführungsformen sitzt der Sensor am Blattelement als Teil des Übertragungselementes.

Schließlich kann eine stegartige Anbindung des die Rolle 6 tragenden Schenkelbereichs in Analogie zu Fig. 7 in der Weise realisiert werden, dass das Blattelement 32, an der Außenkontur beider Schenkel-Endbereiche anliegend, mit diesen verschraubt, verschweißt, verlötet oder verklebt ist.

Alle näher beschriebenen und durch Zeichnungen dargestellten Ausführungsformen erfindungsgemäßer Messwertaufnehmer beziehen sich auf Riementriebe, sie sind jedoch uneingeschränkt auch für Kettentriebe gültig, wenn anstelle der Begriffe Riemenscheibe, Antriebsrolle für Bremssystem/Schwungscheibe sowie Umlenkrolle die Begriffe Kettenblatt, Ritzel für Bremssystem/Schwungscheibe sowie Umlenkritzel eingesetzt werden.

**Patentansprüche**

1. Messwertaufnehmer für umlaufende Zugmittel zur Bestimmung des übertragenen Drehmoments, mit einem in Bezug auf das Zugmittel ruhenden Trägerteil und einem Übertragungselement, auf dem zwei Umlenkrollen vorgesehen sind, die in unterschiedliche Richtung verlaufende Zugmittelabschnitte berühren, und einem Sensor, der mit dem Übertragungselement zusammenwirkt, **dadurch gekennzeichnet, dass** das Übertragungselement (4, 16, 18, 21, 26, 35, 55, 65, 69, 73) um eine stationäre Drehachse (10, 30) verdrehbar am Trägerteil (13) gelagert ist.

2. Messwertaufnehmer nach Anspruch 1, **dadurch gekennzeichnet, dass** die stationäre Drehachse (10, 30) im wesentlichen auf der Höhe der Symmetrieachse (S) zweier in unterschiedliche Richtung verlaufender Zugmittelabschnitte angeordnet ist, und dass die stationäre Drehachse (10, 30) und die Drehachsen der Umlenkrollen (6) im wesentlichen an den Ecken eines gleichschenkeligen Dreiecks sitzen, wobei die Höhenlinie des Dreiecks im wesentlichen mit der Symmetrieachse (S) zusammenfällt.

3. Messwertaufnehmer nach einem der Ansprüche 1 oder 2, **dadurch gekennzeichnet, dass** das Übertragungselement (4, 16, 18, 21, 55, 65, 69, 73) über ein Gelenk am Trägerteil (13) gelagert ist. (Fig. 1, 2, 3, 4, 14, 15, 16, 17)

4. Messwertaufnehmer nach Anspruch 2, **dadurch gekennzeichnet, dass** das Übertragungselement (26, 35) über einen biegeweichen Steg (29, 32) am Trägerteil (13) gelagert ist, wobei zur Ausbildung der stationären Drehachse (30) in der Mitte des Steges (29, 32) die Länge des Steges (29, 32) weniger als ein Viertel, bevorzugt weniger als ein Fünftel, besonders bevorzugt weniger als ein Zehntel der Höhe des gleichschenkeligen Dreiecks beträgt. (Fig. 5, 8, 10).

5. Messwertaufnehmer nach einem der Ansprüche 1 bis 4, **dadurch gekennzeichnet, dass** eine Schwenkbewegung des Übertragungselements (4, 16, 18, 21, 26, 35) um die stationäre Drehachse (10, 30) durch einen mit dem ruhenden Trägerteil (13) starr verbundenen und das Übertragungselement (4, 16, 18, 21, 26, 35) an einem Anschlagspunkt berührenden Kraftsensor (11) verhindert wird. (Fig. 1, 2, 3, 4, 5, 8)

6. Messwertaufnehmer nach einem der Ansprüche 1 bis 5, **dadurch gekennzeichnet, dass** die stationären Drehachse (10, 30) mit der Achse eines Umlaufrades (3) für das umlaufende Zugmittel zusammenfällt. (Fig. 2, 3, 4)

**7.** Messwertaufnehmer nach einem der Ansprüche 1 bis 4, **dadurch gekennzeichnet, dass** als Sensor ein Distanzsensor zur Ermittlung der Verdrehung des Übertragungselementes vorgesehen ist. (Fig. 10)

**8.** Messwertaufnehmer nach einem der Ansprüche 1 bis 2 und 4, **dadurch gekennzeichnet, dass** zumindest ein Dehnungssensor am biegeweichen Steg (29, 32) zur Bestimmung seiner Krümmung vorgesehen ist. (Fig. 11, 12, 13)

**9.** Messwertaufnehmer nach einem der Ansprüche 4 bis 8, **dadurch gekennzeichnet, dass** das Übertragungselement einen riegelförmigen Abschnitt (27) aufweist, der sich entlang der Höhenlinie des Dreiecks in Richtung Trägerteil (13) erstreckt, und dass der Steg (29) durch eine Verengung des riegelförmigen Abschnittes (27) gebildet wird. (Fig. 5)

**10.** Messwertaufnehmer nach einem der Ansprüche 4 bis 9, **dadurch gekennzeichnet, dass** als Steg ein Blattelement (32), vorzugsweise aus Federstahl, am Ende des riegelförmigen Abschnittes (36) vorgesehen ist.

**11.** Messwertaufnehmer nach einem der Ansprüche 1 bis 10, **dadurch gekennzeichnet, dass** das Übertragungselement (4) Viereckform aufweist, wobei in zwei Eckbereichen jeweils eine Umlenkrolle (6), in einem weiteren Eckbereich die stationäre Drehachse (10, 30) und im vierten Eckbereich ein Bezugspunkt für den Sensor, z.B. ein Anschlagpunkt für einen Kraftsensor (11) oder ein Messpunkt für einen Distanzsensor (48, 49), vorgesehen ist. (Fig. 1)

**12.** Messwertaufnehmer nach einem der Ansprüche 1 bis 10, **dadurch gekennzeichnet, dass** das Übertragungselement Dreiecksform aufweist, wobei in zwei Eckbereichen jeweils eine Umlenkrolle (6) und im dritten Eckbereich die stationäre Drehachse (10, 30) vorgesehen sind, wobei an einer weiteren Stelle, vorzugsweise an der Außenkontur des Übertragungselements, ein Bezugspunkt für den Sensor, z.B. ein Anschlagpunkt für einen Kraftsensor (11) oder ein Messpunkt für einen Distanzsensor (48, 49), vorgesehen ist. (Fig. 4)

**13.** Messwertaufnehmer nach einem der Ansprüche 1 bis 12, **dadurch gekennzeichnet, dass** das um die stationäre Drehachse (10, 30) schwenkbare Übertragungselement (4, 16, 18, 21) eine elastische Rückstellwirkung, vorzugsweise durch eine um die Drehachse (10, 30) zentrierte Drehfeder oder eine normal zur Verbindungslinie zwischen der Drehachse (10, 30) und ihrem Angriffspunkt am Übertragungselement orientierte Linearfeder, erhält.

**14.** Messwertaufnehmer nach einem der Ansprüche 1 bis 13, **dadurch gekennzeichnet, dass** der mit dem Übertragungselement (55, 65, 69, 73) zusammenwirkende Sensor (62, 66, 70, 52) auf oder in dem Übertragungselement (55, 65, 69, 73) angeordnet ist. (Fig. 14, 15, 16, 17)

**15.** Ergometer bzw. Sport- oder Trainingsgerät, das durch umlaufende Zugmittel angetrieben wird, **dadurch gekennzeichnet, dass** es einen Messwertaufnehmer nach einem der Ansprüche 1 bis 14 aufweist.

**Fig. 1**

**Fig. 2**

**Fig. 3**

**Fig. 4**

Innere (linke) Kraftsensor-Positionen alternativ eingetragen!

**Fig. 5**

**Fig. 6**

Fig. 7

Fig. 8

Fig. 9

Fig. 10

Fig. 11

Fig. 12

Fig. 13

Fig. 14

**Fig. 15**

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4909086 A
- GB 2312193 A
- WO 2004111591 A1
- US 3992932 A
- US 3598999 A
- GB 2193936 A
- CA 2310974 A1
- DE 3429864 A1
- DE 9014326 U1